# EUROPÄISCHE PATENTSCHRIFT

(11) **EP 2 414 783 B1**
(45) Veröffentlichungstag und Bekanntmachung des Hinweises auf die Patenterteilung: **19.12.2012**
(21) Anmeldenummer: 10706592.2
(22) Anmeldetag: 23.02.2010
(51) Int. Cl.: G01D 5/347

(54) **ANORDNUNG MIT EINEM AN EINEM TRÄGER BEFESTIGTEN MASSSTAB UND VERFAHREN ZUM HALTEN EINES MASSSTABS AN EINEM TRÄGER**
DEVICE WITH A SCALE FIXED TO A SUPPORT AND PROCEDURE FOR FIXING A SCALE TO A SUPPORT
DISPOSITIF AVEC UNE ÉCHELLE FIXÉE SUR UN SUPPORT ET UN PROCÉDÉ POUR LA FIXATION D'UNE ÉCHELLE SUR UN SUPPORT

(30) Priorität: 02.04.2009 DE 102009002142
(43) Veröffentlichungstag der Anmeldung: 08.02.2012
(73) Patentinhaber: Dr. Johannes Heidenhain GmbH, 83301 Traunreut (DE)
(72) Erfinder: SPECKBACHER, Peter, 84558 Kirchweidach (DE); WEIDMANN, Josef, 83352 Altenmarkt (DE); HOLZAPFEL, Wolfgang, 83119 Obing (DE)
(86) Internationale Anmeldenummer: PCT/EP2010/052239
(87) Internationale Veröffentlichungsnummer: WO 2010/112269

(56) Entgegenhaltungen:
- EP-A1- 1 783 463
- EP-A2- 0 416 391
- DD-A1- 229 334
- US-A1- 2007 137 059

## Beschreibung

Zur Messung der Relativlage zweier Maschinenteile ist an einem der Maschinenteile ein Maßstab zu befestigen und am anderen der zueinander beweglichen Maschinenteile eine Abtasteinheit. Bei der Positionsmessung wird eine Messteilung des Maßstabs von der Abtasteinheit abgetastet und positionsabhängige Abtastsignale generiert.

Eine Möglichkeit der Befestigung eines Maßstabs an einem Träger ist in der DD 229 334 A1 beschrieben. Dabei wird der Maßstab über pneumatisches Ansaugen an den Träger gedrängt. Zum Ansaugen ist außerhalb der Messteilung ein Ansaugkanal vorgesehen, der den Maßstab über seine gesamte Länge mit konstanter Andruckkraft an den Träger drängen soll.

Das Problem dabei ist, dass bei einer Auflage des Maßstabs auf dem Träger die Verbindung leicht durch Verunreinigungen oder Luftblasenbildung im Zwischenraum zwischen dem Maßstab und dem Träger gestört sein kann. Diese Störungen führen zu zeitlichen und örtlichen Längenänderungen der Messteilung des Maßstabs, woraus wiederum Messfehler bei der Positionsmessung resultieren. Dieses Problem tritt verstärkt bei relativ großflächigen Maßstäben auf.

In der EP 1 783 463 A1 ist eine Maßstabbefestigung mittels Ansprengen erläutert. Beim großflächigen Ansprengen besteht das Problem, dass eine Störung in der Kontaktfläche die gesamte Ansprengung lösen kann, weil sich das Ablösen fortpflanzt. Um dieses großflächige Lösen der angesprengten Verbindung zu verhindern, ist die Kontaktfläche gemäß der EP 1 783 463 A1 in viele kleine voneinander beabstandete Kontaktflächen unterteilt. Durch diese Ausbildung wird zwar eine sichere Befestigung eines Maßstabs auf einem Träger gewährleistet, eine stressfreie und über die gesamte Messteilungsebene homogene Andruckkraft ist aber damit nur schwer erreichbar.

In der EP 1 783 463 A1 wird darauf hingewiesen, dass das Ansprengen durch pneumatisches Ansaugen des Maßstabs an den Träger eingeleitet werden kann. Eine Halterung des Maßstabs am Träger durch pneumatisches Ansaugen im Messbetrieb der Positionsmesseinrichtung ist nicht angegeben. Konstruktive Maßnahmen zum pneumatischen Ansaugen sind ebenfalls nicht angeführt.

Aufgabe der Erfindung ist es, eine Anordnung mit einem an einem Träger befestigten Maßstab anzugeben, wobei der Maßstab am Träger bezüglich Längenänderungen stabil gehalten wird. Weiterhin soll der Maßstab an jeder Stelle mit möglichst konstanter Andruckkraft sowie driftfrei am Träger gehalten werden.

Gelöst wird diese Aufgabe durch die im Anspruch 1 angegebene Anordnung.

Dabei ist der Maßstab über zweidimensional verteilt angeordnete und voneinander beabstandete Unterstützungen am Träger abgestützt. Die Unterstützungen liegen der einen Messbereich definierenden Messteilung direkt gegenüber und sind in einem gegenseitigen Mittenabstand angeordnet, der kleiner ist als die Dicke des Maßstabs. Die Unterstützungen sind weiterhin derart ausgebildet, dass eine Verbindung durch Ansprengen zwischen den Unterstützungen und dem Maßstab und / oder zwischen den Unterstützungen und dem Träger zumindest im Messbereich des Maßstabs verhindert ist. Zur Erzeugung eines homogenen Unterdrucks im Raum zwischen dem Maßstab und dem Träger ist dieser Raum durch Abdichtmittel von der Umgebung hermetisch abgedichtet.

Die Verbindung durch Ansprengen kann durch mehrere Maßnahmen verhindert werden.

Eine dieser Maßnahmen ist, dass die sich kontaktierenden Oberflächenbereiche zwischen den Unterstützungen und dem Maßstab und / oder den Unterstützungen und dem Träger eine derart hohe Rauhigkeit aufweisen, dass diese Rauhigkeit eine Verbindung durch Ansprengen zwischen diesen Oberflächenbereichen verhindert. Insbesondere ist die Rauhigkeit zumindest einer der sich kontaktierenden Oberflächen größer als 1 nm. Diese Oberflächenbereiche können auch Beschichtungen aufweisen, die ein Ansprengen verhindern, insbesondere metallische Beschichtungen oder hydrophob wirkende Beschichtungen.

Eine weitere Maßnahme zur Verhinderung des Ansprengens ist die Ausbildung der Unterstützungen des Maßstabs derart, dass diese die Gegenfläche nur punktförmig kontaktieren.

Eine weitere Aufgabe der Erfindung ist es, ein Verfahren zum Halten eines Maßstabs an einem Träger anzugeben, wodurch der Maßstab am Träger bezüglich Längenänderungen stabil und an jeder Stelle mit möglichst konstanter Andruckkraft sowie driftfrei gehalten wird.

Gelöst wird diese Aufgabe durch das im Anspruch 13 angegebene Verfahren.

Weitere vorteilhafte Ausbildungen der Erfindung sind in den abhängigen Ansprüchen angegeben.

Durch die Erfindung werden die erreichbaren Vorteile des pneumatischen Ansaugens ausgenutzt, indem möglichst große homogene Flächenkräfte als Haltekräfte aufgebracht werden, gleichzeitig werden aber die Nachteile des großflächigen Kontaktes vermieden, indem viele voneinander getrennte Unterstützungen vorgesehen werden.

Die flächige Ebenheit - auch eines großflächigen Maßstabs - bleibt erhalten bzw. wird nicht gestört, da störende Medien sich in den durch die voneinander beabstandeten Unterstützungen gebildeten Räumen ablagern können. Durch die erfindungsgemäße Maßnahme werden kurzperiodische Längenfehler in der Messteilungsebene vermieden und eine hohe Messgenauigkeit ist sichergestellt.

Der Maßstab ist im Messbetrieb stabil am Träger befestigt, was eine hohe Steifigkeit in Messrichtung sowie senkrecht zur Messteilungsebene bedeutet.

Durch die Erfindung ist im Gegensatz zum Ansprengen gewährleistet, dass sich die durch das pneumatische Ansaugen generierten Haltekräfte gleichmäßig über die gesamte Fläche des Maßstabs ausbilden. Erreicht wird dies dadurch, dass ein Ansprengen an den Kontaktflächen zwischen dem Maßstab und dem Träger vermieden wird. Damit ist nun auch der Vorteil gegeben, dass die Kontaktflächen nicht hochgenau bearbeitet werden müssen, sondern geschliffene Oberflächen ausreichen.

Ausführungsbeispiele der Erfindung werden anhand der Zeichnungen näher erläutert.

Es zeigen:
- Figur 1: einen an einem Träger gehaltenen Maßstab nach einem ersten Ausführungsbeispiel im Querschnitt;
- Figur 2: eine Draufsicht auf die Anordnung gemäß Figur 1;
- Figur 3: eine Unteransicht des Maßstabs gemäß der Anordnung aus Figur 1;
- Figur 4: einen Querschnitt eines Trägers mit einem daran befestigten Maßstab eines zweiten Beispiels, und
- Figur 5: eine Draufsicht auf die Anordnung gemäß Figur 4.

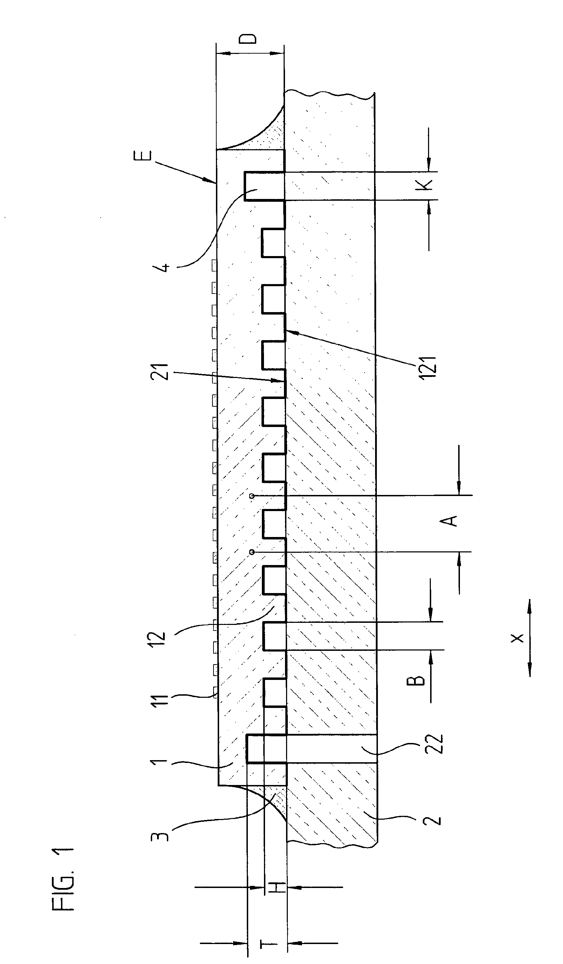

Anhand der Figuren 1 bis 3 wird ein erstes Ausführungsbeispiel der Erfindung erläutert. Dabei ist ein Maßstab 1 aus Glas oder Glaskeramik (z. B. ZERODUR) mit einer Messteilung 11 dargestellt. Die Messteilung 11 ist eine inkrementale Teilung, die bei der Positionsmessung in Messrichtung X von einer nicht dargestellten Abtasteinheit zur Erzeugung von positionsabhängigen Abtastsignalen abgetastet wird. Die Messteilung 11 kann ein reflektierendes Amplitudengitter oder ein Phasengitter sein, das in bekannter Weise zur hochgenauen interferentiellen Positionsmessung dient. Der Maßstab 1 ist während dieser Positionsmessung durch pneumatisches Ansaugen an einem Träger 2 gehalten. Pneumatisches Ansaugen bedeutet Klemmen durch Vakuum, auch vacuum clamping bezeichnet. Dieser Träger 2 besteht vorzugsweise aus einem Material, das den gleichen Ausdehnungskoeffizienten aufweist, wie der Maßstab 1. Der mittlere thermische Ausdehnungskoeffizient α im Temperaturbereich von 0° bis 50° von Maßstab 1 und Träger 2 ist vorzugsweise kleiner als 0,1 x 10⁻⁶ K⁻¹ bei Verwendung von Gläsern mit sogenannter Nullausdehnung, wie ZERODUR, SITAL und ULE, und kleiner als 1,5 x 10⁻⁶K⁻¹ bei Verwendung von Metallen, wie beispielsweise INVAR.

Auf der dem Träger 2 zugewandten Oberfläche des Maßstabs 1 sind Erhebungen 12 ausgebildet. Diese Erhebungen 12 sind zweidimensional räumlich verteilt angeordnet, entweder geometrisch gleichmäßig in einem regelmäßigen Raster verteilt oder statistisch verteilt. Die Erhebungen 12 sind mit einem gegenseitigen Mittenabstand A von kleiner der Dicke D des Maßstabs 1 angeordnet. Insbesondere sind die Erhebungen 12 in einem gegenseitigen Mittenabstand A kleiner 1/10 der Dicke D des Maßstabs 1 angeordnet. Diese Bedingungen müssen an jeder Stelle der zweidimensionalen Verteilung der Erhebungen 12, zumindest aber innerhalb des Messbereichs M, erfüllt sein. Der Messbereich M ist definiert durch den Bereich der Messteilung 11, der für die hochgenaue Positionsmessung genutzt wird. Die Dicke D des Maßstabs 1 ist der Abstand zwischen der Messteilungsebene E, in der die Messteilung 11 liegt, und der Auflagefläche 21 des Trägers 2.

Durch diese Maßnahme ist gewährleistet, dass alle Zug- und Druckspannungen, die durch die Befestigung eingebracht werden, derart räumlich hochfrequent sind, dass sich diese über die Dicke D des Maßstabs 1 abbauen und sich in der Messteilungsebene E nicht als Längenfehler auswirken. Durch die der Messteilung 11 direkt gegenüberliegende Unterstützung ist der Maßstab 1 im Messbetrieb stabil am Träger 2 befestigt, was eine hohe Steifigkeit in Messrichtung X sowie senkrecht zur Messteilungsebene E bedeutet.

Die Höhe H der Erhebungen 12 ist in vorteilhafter Weise größer 20 µm, günstige Werte sind insbesondere 50 µm bis 200 µm. Typische Werte für die Dicke D des Maßstabs 1 liegen bei 1 bis 15 mm. Die Erhebungen 12 bilden zweidimensional verteilt angeordnete und voneinander beabstandete Unterstützungen für den Maßstab 1.

Die den Träger 2 kontaktierenden Oberflächen 121 der Erhebungen 12 des Maßstabs 1 und / oder die die Erhebungen 12 kontaktierende Auflagefläche 21 des Trägers 2 weisen eine derart hohe Rauhigkeit auf, dass diese eine Verbindung durch Ansprengen zwischen diesen Oberflächenbereichen 121, 21 verhindert. Insbesondere ist die Rauhigkeit zumindest einer dieser sich kontaktierenden Oberflächen 121, 21 größer als 1 nm.

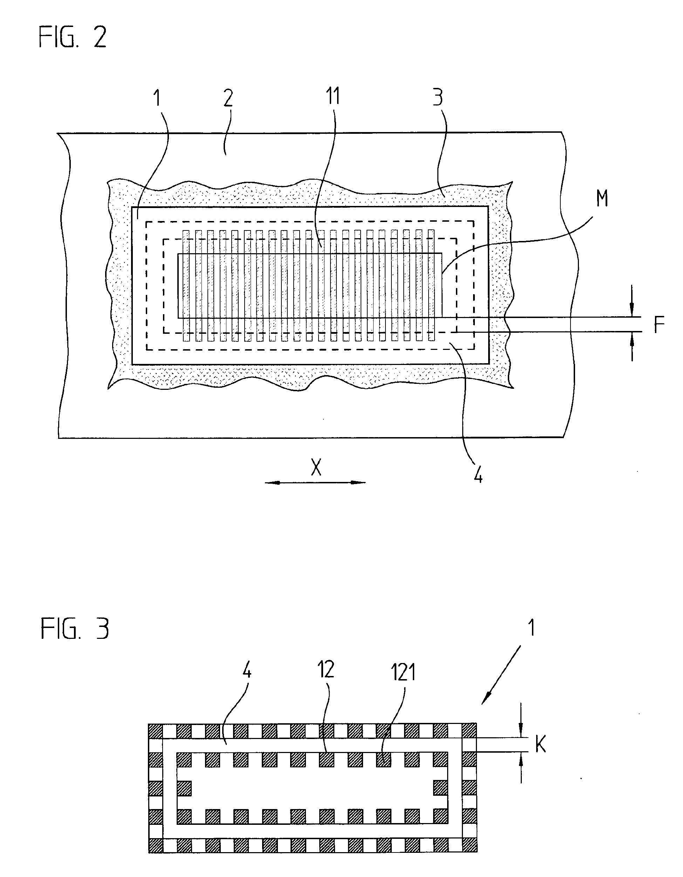

Die in Figur 3 als Unteransicht des Maßstabs gezeigte zweidimensionale räumliche Verteilung der Erhebungen 12 erfolgt derart, dass zwischen den Erhebungen 12 Öffnungskanäle entstehen, die bis zum Ansaugkanal 4 reichen. Durch diese Maßnahme kann die Luft über die gesamte Fläche des Maßstabs 1 über die Öffnungskanäle homogen abgesaugt werden, was eine gute Ebenheit des Maßstabs 1 sicherstellt und die durch das pneumatische Ansaugen generierte Haltekraft kann gleichmäßig über die gesamte Fläche wirken, so dass der Maßstab 1 an jeder Stelle mit zumindest annähernd gleicher Kraft an die Auflagefläche 21 des Trägers 2 gedrängt wird. Die Erhebungen 12 können, wie in Figur 3 schematisch dargestellt ist, quadratische Form aufweisen, sie können aber auch andere Formen, wie beispielsweise Zylinderform, aufweisen.

Es hat sich gezeigt, dass ein Großteil der im Raum zwischen Maßstab 1 und Träger 2 befindlichen Partikel, welche die Ebenheit des Maßstabs 1 stören würden, eine Größe bis 20 µm aufweisen. Aus diesem Grund ist es vorteilhaft, wenn die Öffnungskanäle eine Breite B von mindestens 20 µm aufweisen, also der gegenseitige Randabstand der Auflageflächen 121 der Erhebungen 12 mindestens 20 µm beträgt. Um ausreichende Haltekräfte zu generieren, sollte die lineare Ausdehnung der Auflageflächen 121 der Erhebungen 12 deutlich kleiner sein als der Mittenabstand A.

Der Raum zwischen dem Maßstab 1 und dem Träger 2 ist durch Abdichtmittel 3 von der Umgebung abgedichtet. Die Abdichtmittel 3 sind derart ausgestaltet und angeordnet, dass keine instabilen Störkräfte durch sie einwirken, insbesondere sollen Querkräfte vermieden werden.

Im dargestellten ersten Beispiel ist das Abdichtmittel 3 eine Dichtmasse. Als Dichtmasse können hochviskose Flüssigkeiten, Silikone, Knetmassen, Epoxidharze, Klebstoffe oder Klebebänder eingesetzt werden. Bei der Verwendung von Flüssigkeiten als Abdichtmittel sollten diese eine Viskosität größer als 100 Ns/m² aufweisen.

Anstelle der Dichtmasse kann auch eine Dichtlippe, beispielsweise aus einem Kunststoff, wie z. B. Teflon oder Perburan eingesetzt werden.

Das Abdichtmittel kann auch ein fester umlaufender Steg sein, ausgebildet oder angebracht am Maßstab 1 und / oder am Träger 2 oder angebracht als separates Teil in Form eines Zwischenelementes. Ist das Abdichtmittel am Träger 2 und / oder am Maßstab 1 ausgebildet, so ist es in vorteilhafter Weise mit dem gleichen Herstellungsprozess wie die Erhebungen 12 gefertigt. Das Abdichtmittel 3 kann auch in eine Nut des Maßstabs 1 und / oder des Trägers 2 eingreifen.

Die pneumatische Ansaugung erfolgt über eine Öffnung 22, die zu dem Ansaugkanal 4 führt. Der Ansaugkanal 4 ist außerhalb der Messteilung 11, den Messbereich M umschließend, und insbesondere umlaufend angeordnet. Außerhalb des Messbereichs M bedeutet, außerhalb des für die hochgenaue Positionsmessung verwendeten Bereichs der Messteilung 1. Der Ansaugkanal 4 ist darüber hinaus innerhalb des mittels des Abdichtmittels 3 abgedichteten Raumes, im Maßstab 1 und / oder im Träger 2 angeordnet. Bei einer hinreichenden Abdichtung des Raumes zwischen Maßstab 1 und Träger 2 und einem ausreichend großen Querschnitt des Ansaugkanals 4 entsteht selbst bei kleinen Lecks im Abdichtmittel 3 kein störender Druckabfall im Ansaugkanal 4. Dadurch ist gewährleistet, dass sich auch in dem Raum zwischen dem Maßstab 1 und dem Träger 2 ein homogener Unterdruck ausbildet. Daher ist es einerseits vorteilhaft, dass der Querschnitt des Ansaugkanals 4 erheblich größer ist, als das im Betrieb maximal entstehende Leck. Dadurch wird ein Druckabfall im Raum zwischen Maßstab 1 und Träger 2 vermieden. Andererseits ist es vorteilhaft, dass der Ansaugkanal 4 vom Messbereich M beabstandet angeordnet ist, wobei dieser Abstand F größer als die Dicke D des Maßstabs 1 sein soll. Dadurch werden Störungen, die durch den Ansaugkanal 4 trotzdem eingeführt werden, über den lateralen Abstand F abgebaut und erreichen nicht die Messteilungsebene E. Vorzugsweise ist die Breite K des Ansaugkanals 4 schmal gegenüber der Dicke D des Maßstabs 1, um allenfalls ausschließlich räumlich hochfrequente Spannungen zu erzeugen, die wiederum über die Dicke D des Maßstabs 1 zur Messteilungsebene E hin gut unterdrückt werden. Um den erforderlichen großen Querschnitt des Ansaugkanals 4 zu erreichen, muss dieser mit einer entsprechenden Tiefe T ausgeführt sein.

Vorteilhaft ist es, wenn auch außerhalb des Ansaugkanals 4 Unterstützungen, beispielsweise in Form der Erhebungen 12 angeordnet sind, wie in Figur 3 schematisch dargestellt. Dadurch werden Biegespannungen an den Rändern des Maßstabs 1 vermieden.

Der somit im abgedichteten Raum erzeugte Enddruck liegt typisch im Bereich 100 bis 800 mbar, wobei die Änderung des Drucks über die Zeit kleiner 2 mbar ist.

Bei dem oben dargestellten Beispiel sind die voneinander beabstandeten Erhebungen 12 in Form von Noppen einstückig am Maßstab 1 ausgebildet. Sie werden vorzugsweise durch bekannte Strukturierungsverfahren erzeugt, indem die Bereiche der Erhebungen 12 abgedeckt werden und das Material um die Erhebungen 12 herum weggeätzt wird.

Erhebungen können alternativ oder zusätzlich auch am Träger 2 ausgebildet sein.

Die Erhebungen 12, ausgebildet am Maßstab 1 oder am Träger 2, können auch durch andere Abtragverfahren, wie z.B. Sägen, Fräsen, Strahlbearbeitung oder Laserbearbeitung erzeugt werden.

Die Unterstützungen können auch von eigenständigen stabilen Abstandselementen gebildet sein, die zwischen dem Maßstab und Träger eingebracht sind. Diese Abstandselemente können aus einer auf den Maßstab oder den Träger aufgebrachten und strukturierten Schicht bestehen. Sie können auch als ein eigenständig handhabbares Teil ausgebildet sein, insbesondere in Form einer strukturierten Zwischenschicht oder Zwischenplatte, die eine perforierte Metallfolie sein kann.

Besonders vorteilhaft ist die Verwendung von Unterstützungen, welche den Maßstab punktförmig kontaktieren, um dadurch sicher ein partielles Ansprengen zu verhindern.

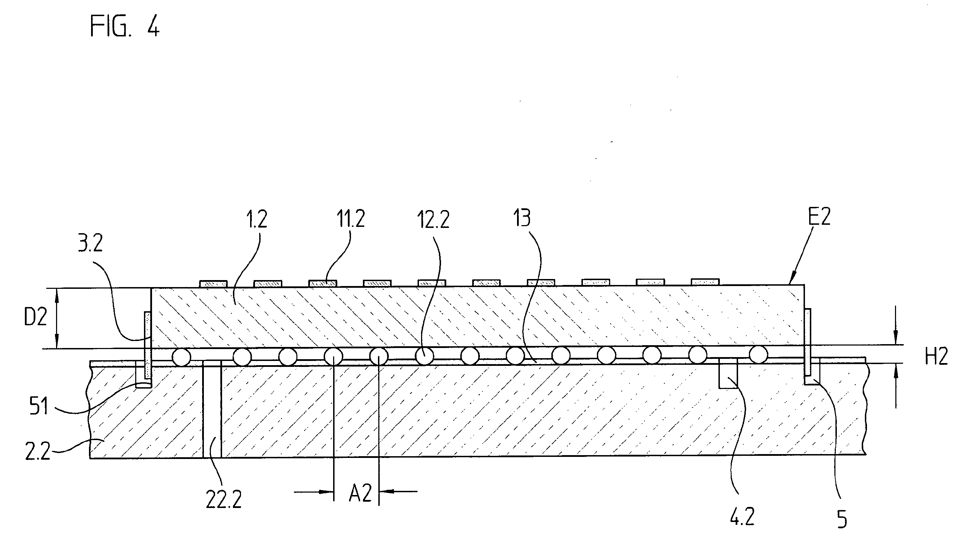

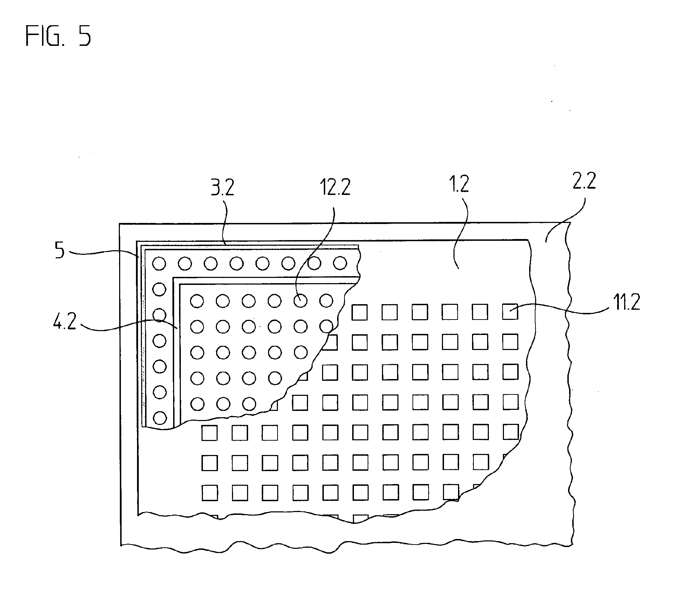

Vorteilhaft ist die Verwendung von Kugeln 12.2 als Unterstützungen für den Maßstab 1.2, wie in dem zweiten Ausführungsbeispiel gemäß der Figuren 4 und 5 schematisch dargestellt ist. Die Kugeln 12.2 sind zumindest im fertig montierten Zustand des Maßstabs 1.2 am Träger 2.2 über Haltemittel 13 in Ihrer Position am Träger 2.2 unverrückbar gehaltert. Unverrückbar bedeutet dabei einerseits, dass ihre Lage gegenüber dem Träger 2.2 unveränderlich ist und andererseits, dass diese unverdrehbar sind.

Die Kugeln 12.2 haben insbesondere einen Durchmesser H2 zwischen 20 µm und 200 µm und bestehen in vorteilhafter Weise aus einem Material, das den gleichen Ausdehnungskoeffizienten aufweist, wie der Maßstab 1.2. Zur driftfreien Halterung der Kugeln 12.2 am Maßstab 1.2 oder am Träger 2.2 dient in vorteilhafter Weise das Haltemittel 13 in Form einer Schicht, in welcher die Kugeln 12.2 örtlich stabil gebunden sind. Diese Schicht ist beispielsweise ein Fotoresist, ein Polymer oder eine Folie und hat eine Dicke, die ein Bruchteil des Durchmessers H2 der Kugeln 12.2 ist, typisch 0,2 bis 2 µm.

In Figur 5 ist die zweidimensionale Messteilung 11.2 des Maßstab 1.2 in Draufsicht dargestellt. Um die zweidimensional verteilte Anordnung der Kugeln 12.2 zwischen dem Maßstab 1.2 und dem Träger 2.2 besser darstellen zu können, ist in einem Teil der Ansicht der Maßstab 1.2 weggelassen.

Um die geforderte Abdichtung des Raumes zwischen dem Maßstab 1.2 und dem Träger 2.2 zu erreichen, ist in diesem Beispiel eine Dichtlippe 3.2 in Folienform verwendet. Die Dichtlippe 3.2 ist einerseits am Maßstab 1.2 befestigt und greift andererseits in eine Nut 5 des Trägers 2.2 ein. Diese Dichtlippe 3.2 greift in die Nut 5 des Trägers 2.2 derart ein, dass die nach innen weisende Fläche der Dichtlippe 3.2 sich an eine innere Begrenzungsfläche 51 der Nut 5 anlegt. Diese Begrenzungsfläche 51 fluchtet mit dem Verlauf der Dichtlippe 3.2, wobei dieser Verlauf senkrecht zur Messteilungsebene E2 ausgerichtet ist. Innerhalb des abgedichteten Raumes ist wiederum ein Ansaugkanal 4.2 angeordnet, der gemäß dem ersten Ausführungsbeispiel dimensioniert ist. Funktional gleichwirkende Elemente sowie Größenbezeichnungen sind in den Zeichnungen des zweiten Ausführungsbeispiels mit dem gleichen Bezugszeichen versehen, wie beim ersten Ausführungsbeispiel, nur ergänzt mit dem Index "2".

## Patentansprüche

1. Anordnung mit einem an einem Träger (2, 2.2) gehaltenen Maßstab (1, 1.2), wobei der Maßstab (1, 1.2) eine Messteilung (11, 11.2) aufweist und der Maßstab (1, 1.2) am Träger (2, 2.2) durch pneumatisches Ansaugen gehalten ist, wobei
der Maßstab (1, 1.2) über zweidimensional verteilt angeordnete und voneinander beabstandete Unterstützungen (12, 12.2) am Träger (2, 2.2) abgestützt ist, die der, einen Messbereich (M, M2) definierenden Messteilung (11, 11.2) gegenüberliegend und in einem gegenseitigen Mittenabstand (A, A2) angeordnet sind, der kleiner ist als die Dicke (D, D2) des Maßstabs (1, 1.2);
die Unterstützungen (12, 12.2) derart ausgebildet sind, dass eine Verbindung durch Ansprengen zwischen den Unterstützungen (12, 12.2) und dem Maßstab (1, 1.2) und / oder den Unterstützungen (12, 12.2) und dem Träger (2, 2.2) zumindest im Messbereich (M, M2) des Maßstabs (1, 1.2) verhindert ist;
der Raum zwischen dem Maßstab (1, 1.2) und dem Träger (2, 2.2) durch Abdichtmittel (3, 3.2) von der Umgebung abgedichtet ist.

2. Anordnung nach Anspruch 1, **dadurch gekennzeichnet, dass** die sich kontaktierenden Oberflächenbereiche (121, 21) zwischen den Unterstützungen (12) und dem Maßstab (1) und / oder den Unterstützungen (12) und dem Träger (2) eine derart hohe Rauhigkeit aufweisen, dass diese eine Verbindung durch Ansprengen zwischen diesen Oberflächenbereichen (121, 21) verhindert.

3. Anordnung nach Anspruch 1, **dadurch gekennzeichnet, dass** die Unterstützungen (12.2) den Maßstab (1.2) und / oder den Träger (2.2) punktförmig kontaktieren, so dass eine Verbindung durch Ansprengen verhindert ist.

4. Anordnung nach einem der vorhergehenden Ansprüche, **dadurch gekennzeichnet, dass** die Unterstützungen (12, 12.2) derart angeordnet und ausgebildet sind, dass diese gegenseitige Freiräume mit einer Höhe (H, H2) von zumindest 20 µm und einem gegenseitigen Randabstand (B, B2) von zumindest 20 µm bilden.

5. Anordnung nach einem der vorhergehenden Ansprüche, **dadurch gekennzeichnet, dass** die Materialien von Träger (2, 2.2) und von Maßstab (1, 1.2) den gleichen thermischen Ausdehnungskoeffizienten aufweisen.

6. Anordnung nach Anspruch 5, **dadurch gekennzeichnet, dass** der Ausdehnungskoeffizient des Trägers (2, 2.2) und des Maßstabs (1, 1.2) kleiner als 1,5 x 10⁻⁶K⁻¹ ist, vorzugsweise kleiner als 0,1 x 10⁻⁶K⁻¹ ist.

7. Anordnung nach einem der vorhergehenden Ansprüche, **dadurch gekennzeichnet, dass** das pneumatische Ansaugen über zumindest einen Ansaugkanal (4, 4.2) erfolgt, der außerhalb des Messbereiches (M, M2) angeordnet ist.

8. Anordnung nach einem der vorhergehenden Ansprüche, **dadurch gekennzeichnet, dass** einstückig am Maßstab (1) oder am Träger (2) Erhebungen (12) in einem zweidimensionalen Raster ausgebildet sind, welche die Unterstützungen bilden.

9. Anordnung nach einem der vorhergehenden Ansprüche 1 bis 7, **dadurch gekennzeichnet, dass** die Unterstützungen Abstandselemente sind, die in einer strukturierten Zwischenschicht ausgebildet sind.

10. Anordnung nach einem der vorhergehenden Ansprüche 1 bis 7, **dadurch gekennzeichnet, dass** die Unterstützungen Kugeln (12.2) sind.

11. Anordnung nach Anspruch 10, **dadurch gekennzeichnet, dass** die Kugeln (12.2) über Haltemittel (13) in ihrer Position unverrückbar gehalten sind.

12. Anordnung nach Anspruch 11, **dadurch gekennzeichnet, dass** das Haltemittel eine auf dem Träger (2.2) oder dem Maßstab (1.2) angeordnete Schicht (13) ist, in welche die Kugeln (12.2) eingebettet sind, wobei die Dicke der Schicht (13), insbesondere ein Bruchteil des Durchmessers (H2) der Kugeln (12.2) ist.

13. Verfahren zum Halten eines Maßstabs (1, 1.2) an einem Träger (2, 2.2) während der Abtastung einer Messteilung (11, 11.2) des Maßstabs (1, 1.2) zur Positionsmessung, wobei das Halten während der Positionsmessung durch pneumatisches Ansaugen des Maßstabs (1, 1.2) an den Träger (2, 2.2) erfolgt, wobei
der Maßstab (1,1.2) über zweidimensional verteilt angeordnete Unterstützungen (12, 12.2) unterstützt wird, die der Messteilung (11, 11.2) gegenüberliegend angeordnet sind, und einen gegenseitigen Mittenabstand (A, A2) aufweisen, der kleiner ist als die Dicke (D, D2) des Maßstabs (1, 1.2);
eine Verbindung durch Ansprengen zwischen den Unterstützungen (12, 12.2) und dem Maßstab (1, 1.2) und/oder den Unterstützungen (12, 12.2) und dem Träger (2, 2.2) zumindest im Messbereich (M, M2) des Maßstabs (1, 1.2) verhindert wird;
durch das pneumatische Ansaugen eine in einem Raum zwischen dem Maßstab (1, 1.2) und dem Träger (2, 2.2) wirkende Haltekraft generiert wird, wobei dieser Raum durch Abdichtmittel (3, 3.2) von der Umgebung abgedichtet ist.

## Claims

1. Arrangement having a scale (1, 1.2) retained on a carrier (2, 2.2), wherein the scale (1, 1.2) has a graduation (11, 11.2) and the scale (1, 1.2) is retained on the carrier (2, 2.2) by pneumatic suction attachment, wherein
the scale (1, 1.2) is supported on the carrier (2, 2.2) via two-dimensionally distributed and spaced-apart supports (12, 12.2) which are located opposite the graduation (11, 11.2), defining a measuring region (M, M2), and are arranged at a centre-to-centre spacing (A, A2) apart which is smaller than the thickness (D, D2) of the scale (1, 1.2);
the supports (12, 12.2) are designed so as to prevent connection by wringing between the supports (12, 12.2) and the scale (1, 1.2) and/or the supports (12, 12.2) and the carrier (2, 2.2) at least in the measuring region (M, M2) of the scale (1, 1.2);
the space between the scale (1, 1.2) and the carrier (2, 2.2) is sealed from the surroundings by sealants (3, 3.2).

2. Arrangement according to Claim 1, **characterized in that** the surface regions (121, 21) in contact between the supports (12) and the scale (1) and/or the supports (12) and the carrier (2) have such a high level of roughness that this roughness prevents connection by wringing between these surface regions (121, 21).

3. Arrangement according to Claim 1, **characterized in that** the supports (12.2) are in punctiform contact with the scale (1.2) and/or the carrier (2.2), and this therefore prevents connection by wringing.

4. Arrangement according to one of the preceding claims, **characterized in that** the supports (12, 12.2) are arranged, and designed, such that they form clearances with a height (H, H2) of at least 20 µm and a peripheral spacing (B, B2) apart of at least 20 µm.

5. Arrangement according to one of the preceding claims, **characterized in that** the materials of the carrier (2, 2.2) and of the scale (1, 1.2) have the same thermal expansion coefficients.

6. Arrangement according to Claim 5, **characterized in that** the expansion coefficient of the carrier (2, 2.2) and of the scale (1, 1.2) is smaller than 1.5 x 10⁻⁶K⁻¹, preferably smaller than 0.1 x 10⁻⁶K⁻¹.

7. Arrangement according to one of the preceding claims, **characterized in that** pneumatic suction attachment takes place via at least one suction-attachment channel (4, 4.2), which is arranged outside the measuring region (M, M2).

8. Arrangement according to one of the preceding claims, **characterized in that** elevations (12), which form the supports, are formed in one piece, in a two-dimensional grid, on the scale (1) or on the carrier (2).

9. Arrangement according to one of preceding Claims 1 to 7, **characterized in that** the supports are spacer elements which are formed in a structured intermediate layer.

10. Arrangement according to one of preceding Claims 1 to 7, **characterized in that** the supports are balls (12.2).

11. Arrangement according to Claim 10, **characterized in that** the balls (12.2) are retained immovable in position via retaining means (13).

12. Arrangement according to Claim 11, **characterized in that** the retaining means is a layer (13) which is arranged on the carrier (2.2) or the scale (1.2) and in which the balls (12.2) are embedded, wherein the thickness of the layer (13) is, in particular, a fraction of the diameter (H2) of the balls (12.2).

13. Method of retaining a scale (1, 1.2) on a carrier (2, 2.2) during the operation of scanning a graduation (11, 11.2) of the scale (1, 1.2) for position-measuring purposes, wherein the retaining action, during the position-measuring operation, is realized by pneumatic suction attachment of the scale (1, 1.2) on the carrier (2, 2.2), wherein
the scale (1, 1.2) is supported via two-dimensionally distributed supports (12, 12.2) which are located opposite the graduation (11, 11.2) and have a centre-to-centre spacing (A, A2) apart which is smaller than the thickness (D, D2) of the scale (1, 1.2);
connection by wringing between the supports (12, 12.2) and the scale (1, 1.2) and/or the supports (12, 12.2) and the carrier (2, 2.2) is prevented at least in the measuring region (M, M2) of the scale (1, 1.2);
the pneumatic suction attachment generates a retaining force which acts in a space between the scale (1, 1.2) and the carrier (2, 2.2), wherein this space is sealed from the surroundings by sealants (3, 3.2).

## Revendications

1. Agencement comprenant une échelle (1, 1.2) fixée sur un support (2, 2.2), l'échelle (1, 1.2) présentant une division de mesure (11, 11.2) et l'échelle (1, 1.2) étant fixée sur le support (2, 2.2) par aspiration pneumatique,
l'échelle (1, 1.2) étant supportée sur le support (2, 2.2) par le biais d'appuis (12, 12.2) disposés de manière répartie bidimensionnellement et espacés les uns des autres, lesquels appuis sont disposés en regard de la division de mesure (11, 11.2) définissant une zone de mesure (M, M2) et à une distance entre centres mutuelle (A, A2) qui est inférieure à l'épaisseur (D, D2) de l'échelle (1, 1.2) ;
les appuis (12, 12.2) étant réalisés de telle sorte qu'une liaison par accolage entre les appuis (12, 12.2) et l'échelle (1, 1.2) et/ou entre les appuis (12, 12.2) et le support (2, 2.2) soit empêchée au moins dans la zone de mesure (M, M2) de l'échelle (1, 1.2) ;
l'espace entre l'échelle (1, 1.2) et le support (2, 2.2) étant étanché vis-à-vis de l'environnement par des moyens d'étanchéité (3, 3.2).

2. Agencement selon la revendication 1, **caractérisé en ce que** les zones de la surface (121, 21) en contact mutuel, entre les appuis (12) et l'échelle (1) et/ou entre les appuis (12) et le support (2), présentent une rugosité élevée, si bien que celle-ci empêche une liaison par accolage entre ces zones de surface (121, 21).

3. Agencement selon la revendication 1, **caractérisé en ce que** les appuis (12.2) viennent en contact ponctuel avec l'échelle (1.2) et/ou le support (2.2), de telle sorte qu'une liaison par accolage soit empêchée.

4. Agencement selon l'une quelconque des revendications précédentes, **caractérisé en ce que** les appuis (12, 12.2) sont disposés et réalisés de telle sorte qu'ils forment des espaces libres en regard ayant une hauteur (H, H2) d'au moins 20 µm et une distance entre bords mutuelle (B, B2) d'au moins 20 µm.

5. Agencement selon l'une quelconque des revendications précédentes, **caractérisé en ce que** les matériaux du support (2, 2.2) et de l'échelle (1, 1.2) présentent les mêmes coefficients de dilatation thermique.

6. Agencement selon la revendication 5, **caractérisé en ce que** le coefficient de dilatation du support (2, 2.2) et de l'échelle (1, 1.2) est inférieur à 1,5 x 10⁻⁶K⁻¹, de préférence est inférieur à 0,1 x 10⁻⁶K⁻¹.

7. Agencement selon l'une quelconque des revendications précédentes, **caractérisé en ce que** l'aspiration pneumatique s'effectue par le biais d'au moins un canal d'aspiration (4, 4.2) qui est disposé à l'extérieur de la zone de mesure (M, M2).

8. Agencement selon l'une quelconque des revendications précédentes, **caractérisé en ce que** des rehaussements (12) sont réalisés d'une seule pièce sur l'échelle (1) ou sur le support (2) suivant une trame bidimensionnelle, et forment les appuis.

9. Agencement selon l'une quelconque des revendications 1 à 7, **caractérisé en ce que** les appuis sont des éléments d'espacement qui sont réalisés dans une couche intermédiaire structurée.

10. Agencement selon l'une quelconque des revendications précédentes 1 à 7, **caractérisé en ce que** les appuis sont des billes (12.2).

11. Agencement selon la revendication 10, **caractérisé en ce que** les billes (12.2) sont maintenues de manière immobile en position par le biais de moyens de fixation (13).

12. Agencement selon la revendication 11, **caractérisé en ce que** le moyen de fixation est une couche (13) disposée sur le support (2.2) ou l'échelle (1.2), dans laquelle les billes (12.2) sont encastrées, l'épaisseur de la couche (13) étant en particulier une fraction du diamètre (H2) des billes (12.2).

13. Procédé pour fixer une échelle (1, 1.2) sur un support (2. 2.2) pendant le balayage d'une division de mesure (11, 11.2) de l'échelle (1, 1.2) pour la mesure de position, la fixation s'effectuant pendant la mesure de position par aspiration pneumatique de l'échelle (1, 1.2) sur le support (2, 2.2),
l'échelle (1, 1.2) étant supportée par le biais d'appuis (12, 12.2) disposés de manière répartie bidimensionnellement, qui sont disposés en regard de la division de mesure (11, 11.2), et qui présentent une distance entre centres mutuelle (A, A2) qui est inférieure à l'épaisseur (D, D2) de l'échelle (1, 1.2) ;
une liaison par accolage entre les appuis (12, 12.2) et l'échelle (1, 1.2) et/ou entre les appuis (12, 12.2) et le support (2, 2.2) étant empêchée au moins dans la zone de mesure (M, M2) de l'échelle (1, 1.2) ;
une force de fixation agissant par aspiration pneumatique dans un espace entre l'échelle (1, 1.2) et le support (2, 2.2) étant produite, cet espace étant étanché vis-à-vis de l'environnement par des moyens d'étanchéité (3, 3.2).
